# EUROPÄISCHE PATENTSCHRIFT

(11) **EP 2 649 350 B1**
(45) Veröffentlichungstag und Bekanntmachung des Hinweises auf die Patenterteilung: **18.11.2015**
(21) Anmeldenummer: 11799272.7
(22) Anmeldetag: 12.12.2011
(51) Int. Cl.: F16K 1/226

(54) **KLAPPENVENTIL SOWIE DICHTUNG FÜR EIN KLAPPENVENTIL**
FLAP VALVE AND SEAL FOR A FLAP VALVE
SOUPAPE À CLAPET ET JOINT D'ÉTANCHÉITÉ DESTINÉ À UNE SOUPAPE À CLAPET

(30) Priorität: 10.12.2010 DE 102010055430
(43) Veröffentlichungstag der Anmeldung: 16.10.2013
(73) Patentinhaber: Pentair Südmo GmbH, 3469 Riesbuerg (DE)
(72) Erfinder: DEGER, Werner, 73467 Kirchheim (DE)
(74) Vertreter: Witte, Weller & Partner Patentanwälte mbB
(86) Internationale Anmeldenummer: PCT/EP2011/072415
(87) Internationale Veröffentlichungsnummer: WO 2012/076719

(56) Entgegenhaltungen:
- EP-A1- 1 507 107
- DE-A1- 19 919 281
- DE-A1-102006 033 966
- GB-A- 2 020 788
- US-A- 1 977 351

## Beschreibung

Die Erfindung betrifft ein Klappenventil, mit einer Dichtung, die einen ringförmigen Dichtungskörper aus einem elastomeren Material aufweist, und mit einer ringförmigen Nut zur Aufnahme der Dichtung, wobei der Dichtungskörper einen in Bezug auf eine Längsachse des Dichtungskörpers radial inneren Wandabschnitt, der eine Dichtfläche aufweist, und einen radial äußeren Wandabschnitt aufweist, der eine größere Längserstreckung in Richtung der Längsachse aufweist als der radial innere Wandabschnitt, wobei der radial äußere Wandabschnitt mit dem radial inneren Wandabschnitt eine Stufe bildet, und wobei der radial äußere Wandabschnitt formschlüssig in einem radial äußeren Nutabschnitt der Nut aufgenommen ist, so dass Längsenden des radial äußeren Wandabschnitts in dem radial äußeren Nutabschnitt gehalten sind, gemäß dem Oberbegriff des Anspruchs 1.

Die Erfindung betrifft des Weiteren eine Dichtung für ein Klappenventil, mit einem ringförmigen Dichtungskörper aus einem elastomeren Material, wobei der Dichtungskörper einen in Bezug auf eine Längsachse des Dichtungskörpers radial inneren Wandabschnitt, der eine Dichtfläche aufweist, und einen radial äußeren Wandabschnitt aufweist, der eine größere Längserstreckung in Richtung der Längsachse aufweist als der radial innere Wandabschnitt, wobei der radial äußere Wandabschnitt mit dem radial inneren Wandabschnitt eine Stufe bildet, gemäß dem Oberbegriff des Anspruchs 7.

Ein Klappenventil und eine Dichtung der jeweils eingangs genannten Art ist aus US 3 048 363 A bekannt.

Ein Klappenventil gemäß der vorliegenden Erfindung wird vorzugsweise in einer Rohrleitung einer prozesstechnischen Anlage, beispielsweise einer prozesstechnischen Anlage in der Lebensmittelindustrie oder in der chemischen Industrie, verwendet. Allgemein weist ein solches Klappenventil ein Gehäuse auf, das durch zwei Ringflansche gebildet wird, zwischen denen eine Klappe drehbar gehalten ist. Die Klappe ist üblicherweise in Form eines Tellers ausgebildet. Die Drehachse der Klappe verläuft dabei senkrecht zur Längsachse des Klappenventils. Unter "Längsachse" ist hier die geometrische Achse zu verstehen, die durch die Durchflussrichtung durch das Klappenventil bestimmt ist.

Zwischen den beiden zuvor genannten Ringflanschen des Klappenventils ist des Weiteren eine Dichtung angeordnet. Im geschlossenen Zustand des Klappenventils ist die Klappe senkrecht zur Längsachse des Klappenventils orientiert, wobei in diesem Zustand der radial äußere Umfangsrand der Klappe mit der Dichtfläche des radial inneren Wandabschnitts des Dichtungskörpers dichtend in Anlage steht. Durch Drehen der Klappe um 90° wird das Klappenventil vollständig geöffnet.

Bei bekannten Klappenventilen ist die Dichtung einteilig und einstückig aus einem elastomeren Material gefertigt. Es hat sich nun im Betrieb derartiger Klappenventile gezeigt, dass eine solche Ausgestaltung der Dichtung zu folgenden technischen Problemen führt.

Wenn das Klappenventil ausgehend von seiner vollständigen Schließstellung geöffnet wird, kommt der äußere Umfangsrand der Klappe mit der Dichtfläche des radial inneren Wandabschnitts außer Anlage, wodurch zunächst ein kleiner Durchtrittsspalt für das Medium entsteht. Wenn in der Rohrleitung, in der das Klappenventil zum Absperren der Rohrleitung angeordnet ist, ein hoher Druck ansteht, tritt das Medium durch den beim anfänglichen Öffnen des Klappenventils entstehenden Spalt mit sehr hoher Strömungsgeschwindigkeit durch das Klappenventil, die im Bereich der Dichtfläche einen statischen Unterdruck erzeugt. Dieser statische Unterdruck kann dazu führen, dass der radial äußere Wandabschnitt des Dichtungskörpers der Dichtung aus dem radial äußeren Nutabschnitt der Nut herausgezogen wird. Beim nächsten vollständigen Schließen des Klappenventils kann es dazu kommen, dass die Klappe beim In-Eingriff-Kommen mit der Dichtung letztere entweder vollständig aus der Nut herauszieht oder die Dichtung zumindest beschädigt. Hierbei ist zu berücksichtigen, dass der Umfangsrand der Klappe beim Übergang in den Schließzustand eine reibungsbehaftete Walkarbeit an der Dichtfläche des radial inneren Wandabschnitts verrichtet. Die dabei auf die Dichtung beim Übergang in den Schließzustand auftretenden Kräfte können daher die Dichtung, wenn deren radial äußerer Wandabschnitt nicht mehr vollständig formschlüssig in dem radial äußeren Nutabschnitt der Nut liegt, aus der Nut herausbewegen oder sie beschädigen.

Auch beim Übergang des Klappenventils von der Offenstellung in die Schließstellung kann durch erhöhte Strömungsgeschwindigkeiten des Mediums ein Unterdruck entstehen, der die Dichtung aus der Nut zieht. Entsprechend kann das Klappenventil die Rohrleitung nicht mehr dicht absperren.

Das bekannte Klappenventil hat daher den Nachteil, dass es nicht ausreichend betriebssicher ist.

Nun wäre es denkbar, die Dichtung insgesamt aus einem steifen Material zu fertigen, jedoch ist dies im Hinblick auf das notwendige dichtende Zusammenwirken der Klappe mit der Dichtfläche nachteilig, weil die Dichtwirkung gegenüber einem weichen elastomeren Material verringert wird.

Es sind auch im Durchmesser sehr großbauende Klappenventile bekannt, bei denen auf der radial äußeren Außenseite des Dichtungskörpers ein in Umfangsrichtung zweiteilig aufgebauter Metallring angeordnet ist, der zwischen den beiden Flanschen formschlüssig eingespannt ist. Ein solcher Aufbau eines Klappenventils hat jedoch den Nachteil, dass er zusätzlich zu den beiden Flanschen ein weiteres Gehäuseteil, nämlich den geteilten Metallring, erfordert, wodurch die Gestehungskosten eines solchen Klappenventils unerwünscht hoch sind.

Das aus dem eingangs genannten Dokument US 3 048 363 A bekannte Klappenventil weist eine Dichtung auf, die mit einem verstärkenden Metallring auf der Rückseite versehen ist, wobei der Metallring in das Dichtungsmaterial eingebettet sein kann. Der Metallring ist vollumfänglich an der Dichtung ausgebildet. In einem weiteren dort beschriebenen Ausführungsbeispiel ist die Verstärkung zusätzlich mit Stiften versehen, die sich in Längsrichtung der Dichtung erstrecken.

DE 72 06 728 U offenbart ein Klappenventil mit einer Nut, bei der die Dichtung stabilisiert und unabhängig von ihrer Befestigungsart sicher gehalten werden soll. Dazu ist die Dichtung an ihrer äußeren Mantelfläche mit einem Stabilisierungsring fest verbunden, wobei der Stabilisierungsring eine gewellte Form oder eine flache Form aufweisen kann.

GB 2 020 788 A offenbart ein Klappenventil mit einer Dichtung mit einem radial inneren Wandabschnitt, der die Dichtfläche bildet, und sich radial erstreckenden Schenkeln. Um den Verschleiß der Dichtung zu reduzieren, ist eine Feder zwischen dem Ventilgehäuse und der Dichtung angeordnet, die beim Schließen der Klappe bewirkt, dass der radial innere Wandabschnitt radial nach außen wegfedern kann. Die Feder ist an der Dichtung vollumfänglich als zweigeteilter Ring ausgebildet.

DE 199 19 281 A1 offenbart ein Klappenventil mit einer Dichtung, die ein Federelement aufweist, die in den Dichtungskörper integriert ist.

US 1 977 351 A offenbart ein Klappenventil mit einer Dichtung, wobei die Dichtung durch Drähte, die sich in Umfangsrichtung der Dichtung erstrecken, oder durch eine vollumfängliche Metallplatte auf der Rückseite der Dichtung verstärkt sein kann.

EP 1 507 107 A1 offenbart eine Dichtung für Klappenventile, wobei die Dichtung ein gummielastisches Material aufweist, das zumindest im Bereich der Anlagefläche der Ventilklappe zumindest teilweise durch ein Material ersetzt ist, dessen thermische Ausdehnung in etwa der des Gehäusematerials entspricht oder geringer ist und entweder elastische Eigenschaften aufweist, die denen des Dichtungsmaterials entsprechen und/oder in Form von elastischen Federn in das Dichtungsmaterial eingebracht wird.

Der Erfindung liegt die Aufgabe zugrunde, ein Klappenventil und eine Dichtung der jeweils eingangs genannten Art dahingehend weiterzubilden, dass mit geringem Aufwand eine höhere Betriebssicherheit des Klappenventils erreicht wird.

Erfindungsgemäß wird diese Aufgabe hinsichtlich des eingangs genannten Klappenventils durch die kennzeichnenden Merkmale des Anspruchs 1 und der eingangs genannten Dichtung durch die kennzeichnenden Merkmale des Anspruchs 7 gelöst.

Die Verstärkung des radial äußeren Wandabschnitts der Dichtung aus einem Material, das steifer ist als das elastomere Material des übrigen Dichtungskörpers, bewirkt, dass im Fall des Auftretens eines statischen Unterdrucks beim Öffnen oder Schließen des Klappenventils der radial äußere Wandabschnitt nicht aus dem radial äußeren Nutabschnitt herausgezogen wird. Durch die erfindungsgemäß vorgesehene Verstärkung wird eine Aufhebung des Formschlusses der beiden Längsenden mit dem radial äußeren Nutabschnitt vermieden.

Die Verstärkung befindet sich vorzugsweise nur im radial äußeren Wandabschnitt des Dichtungskörpers, während der radial innere Wandabschnitt weiterhin aus einem elastomeren Material bestehen kann, so dass die Dichtwirkung zwischen der Klappe und der Dichtfläche des radial inneren Wandabschnitts unvermindert gut ist.

Die erfindungsgemäße Dichtung und das erfindungsgemäße Klappenventil sind auch hinsichtlich der Gestehungskosten gegenüber einem herkömmlichen Klappenventil nicht erhöht, weil die Verstärkung an der Dichtung selbst vorgesehen ist, während ein geteilter metallischer Stützring wie bei den oben beschriebenen bekannten Klappenventilen nicht erforderlich ist.

Ein weiterer Vorteil der erfindungsgemäßen Ausgestaltung des Klappenventils besteht darin, dass bereits bestehende Klappenventile mit der erfindungsgemäßen Dichtung nachgerüstet werden können, ohne dass dazu eine bauliche Veränderung der Flansche des Klappenventils erforderlich ist.

Die Verstärkung kann beispielsweise durch Kunststoff- oder Metallelemente realisiert werden, wie nachfolgend noch beschrieben wird.

Die Verstärkung ist durch zumindest zwei in Umfangsrichtung getrennte Verstärkungselemente gebildet, die sich jeweils teilumfänglich über den radial äußeren Wandabschnitt erstrecken.

Dabei sind die Verstärkungselemente als Ringbandabschnitte oder Plättchen ausgebildet.

Gegenüber einer Ausgestaltung der Verstärkung in Form eines sich vollumfänglich um die Längsachse erstreckenden Ringbandes hat diese Maßnahme den Vorteil, dass die Verstärkungselemente sehr einfach ausgestaltet sein können, da im Unterschied zu der vollumfänglichen Ausgestaltung Bohrungen in der Verstärkung für die Durchführung der Achse, um die die Klappe verdrehbar ist, nicht erforderlich sind. Die gemäß der vorliegenden Ausgestaltung nur partiell vorgesehenen Verstärkungselemente können nämlich dann außerhalb der Durchführung der Achse der Klappe durch die Dichtung angeordnet werden.

Außerdem bleibt in der vorliegenden Ausgestaltung die radiale Flexibilität des gesamten Dichtungskörpers gegenüber einer vollumfänglichen Verstärkung besser erhalten, was das Einsetzen der Dichtung in die Nut bei der Montage des Klappenventils oder bei der Reparatur erleichtern kann.

Das zumindest eine Verstärkungselement ist als Einlegeteil ausgebildet, das in eine Ausnehmung an der radial äußeren Außenseite des radial äußeren Wandabschnitts eingelegt ist.

Hierbei ist von Vorteil, dass sich die erfindungsgemäße Dichtung besonders einfach herstellen lässt, weil zunächst der Dichtungskörper aus einem elastomeren Material gefertigt wird, wobei die eine oder mehreren Ausnehmungen beim Herstellen des Dichtungskörpers eingeformt werden, und anschließend werden das oder die Verstärkungselemente dann in die Ausnehmungen eingelegt.

Dabei kann das oder können die Verstärkungselemente in der Ausnehmung durch Kleben oder durch Einklicken festgelegt oder lose eingelegt sein.

In einer bevorzugten Ausgestaltung des Klappenventils und der Dichtung erstreckt sich die Verstärkung des radial äußeren Wandabschnitts in Längsrichtung nicht über die gesamte axiale Länge des radial äußeren Wandabschnitts und ist auf den Bereich zwischen den Längsenden beschränkt.

In dieser Ausgestaltung bleiben die Längsenden des radial äußeren Wandabschnitts des Dichtungskörpers bevorzugt aus einem elastomeren Material, wodurch das Einsetzen des radial äußeren Wandabschnitts in den radial äußeren Nutabschnitt der Flansche einfach zu bewerkstelligen ist, weil sich die Längsenden so leichter in den radial äußeren Nutabschnitt eindrücken lassen.

Vorzugsweise ist ein kleinster Abstand eines Längsendes der Verstärkung vom radial und axial inneren Ende des radial äußeren Nutabschnitts kleiner ist als der Abstand dieses Längsendes der Verstärkung vom axial äußeren Ende des radial äußeren Nutabschnitts.

Bei der entsprechenden Ausgestaltung der Dichtung ist ein kleinster Abstand eines Längsendes der Verstärkung vom radial und axial inneren Ende der Stufe zum radial inneren Wandabschnitt kleiner als ein Abstand dieses Längsendes der Verstärkung vom axial äußeren Ende des radial äußeren Wandabschnitts.

In dieser Ausgestaltung begrenzt das axiale Ende der Verstärkung mit dem radial und axial inneren Ende des radial äußeren Nutabschnitts einen Spalt, dessen Spaltweite kleiner ist als das Längsende des radial äußeren Wandabschnitts, der sich in dem radial äußeren Nutabschnitt befindet. Auf diese Weise verhindert die Verstärkung im Fall des Auftretens eines statischen Unterdrucks das Herausziehen der Längsenden aus der Einfassung in dem radial äußeren Nutabschnitt.

In einer weiteren bevorzugten Ausgestaltung weist die Verstärkung eine radiale Dicke auf, die maximal so groß ist wie die radiale Dicke des radial äußeren Wandabschnitts.

Hierbei ist von Vorteil, dass der radial innere Wandabschnitt des Dichtungskörpers der Dichtung wie bei den bekannten Dichtungen aus einem elastomeren Material besteht, wodurch die Klappe des Klappenventils mit hoher Dichtwirkung mit der Dichtfläche der Dichtung in Eingriff steht.

In einer weiteren bevorzugten Ausgestaltung weist die Verstärkung zumindest ein Verstärkungselement auf, das aus einer Mehrzahl von Verstärkungselementabschnitten aufgebaut ist, von denen jeweils benachbarte über jeweils einen sich in Umfangsrichtung erstreckenden in Längsrichtung schmalen Steg verbunden sind.

Diese Ausgestaltung hat den Vorteil, dass die Anzahl an separaten Verstärkungselementen reduziert ist, was die Herstellung der Dichtung erleichtert, insbesondere dann, wenn das zumindest eine Verstärkungselement als Einlegeteil zum Einlegen in eine Ausnehmung auf der radial äußeren Außenseite des radial äußeren Wandabschnitts der Dichtung ausgebildet ist. Des Weiteren hat diese Ausgestaltung den Vorteil, dass die radiale Flexibilität der gesamten Dichtung durch die schmalen Verbindungsstege weitestgehend erhalten bleibt.

Weitere Merkmale und Vorteile ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

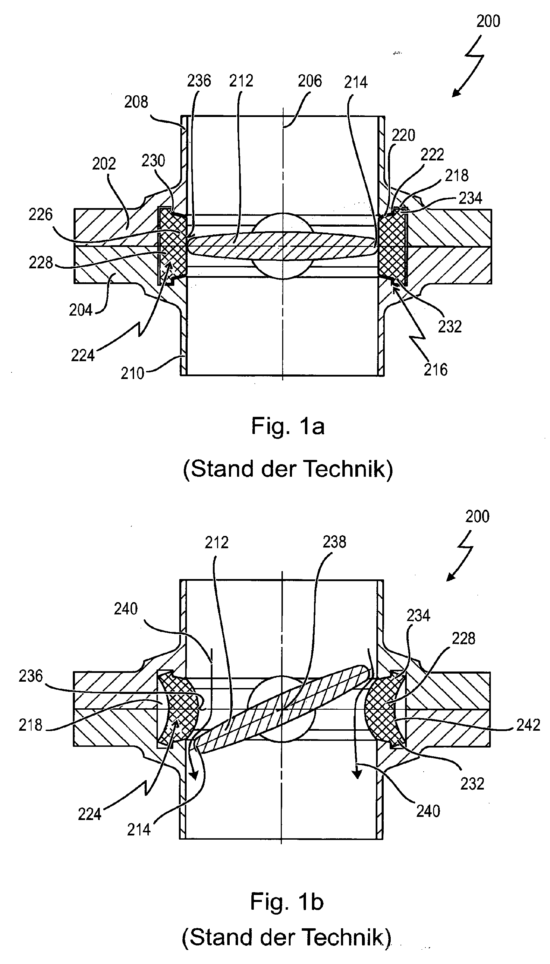

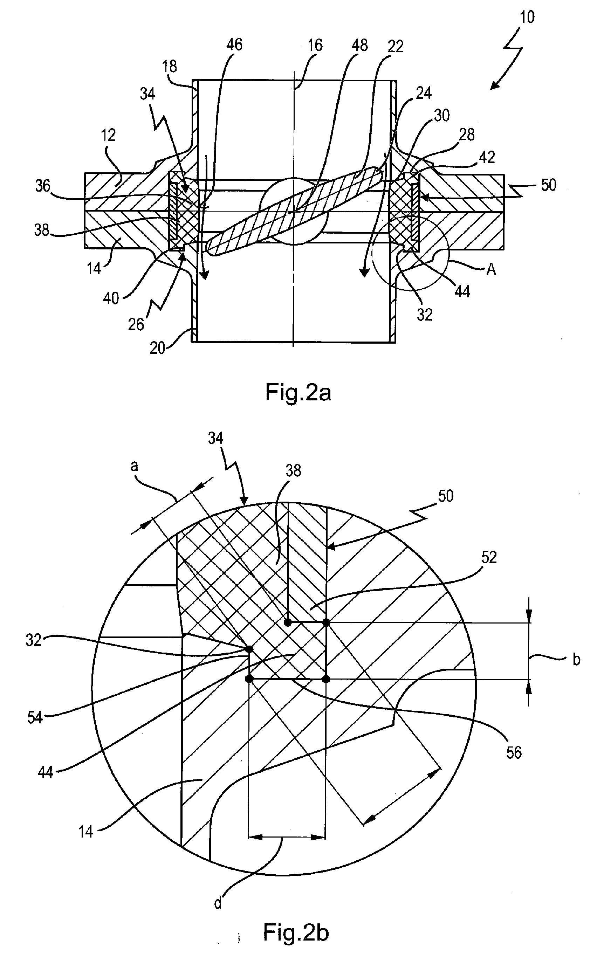

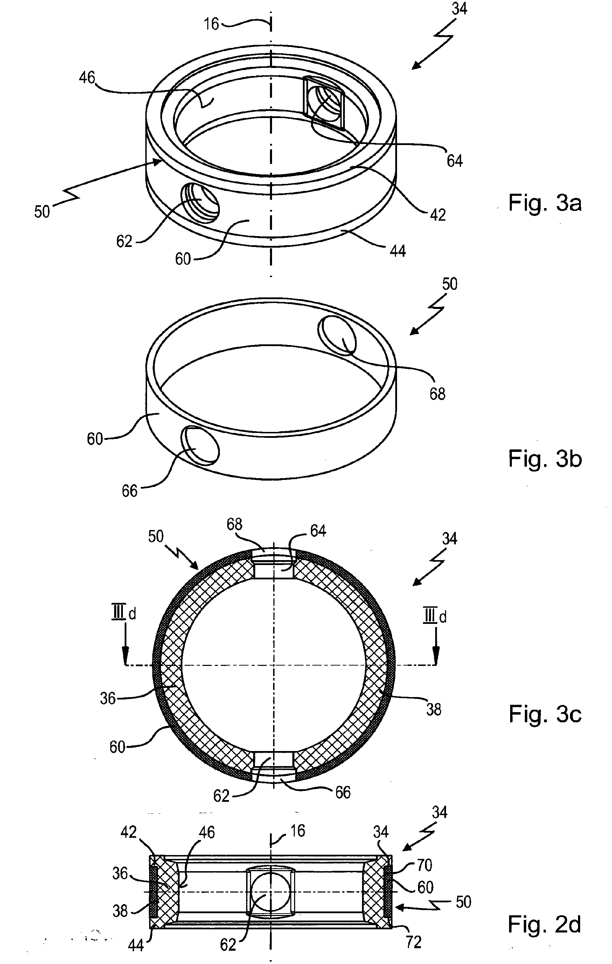

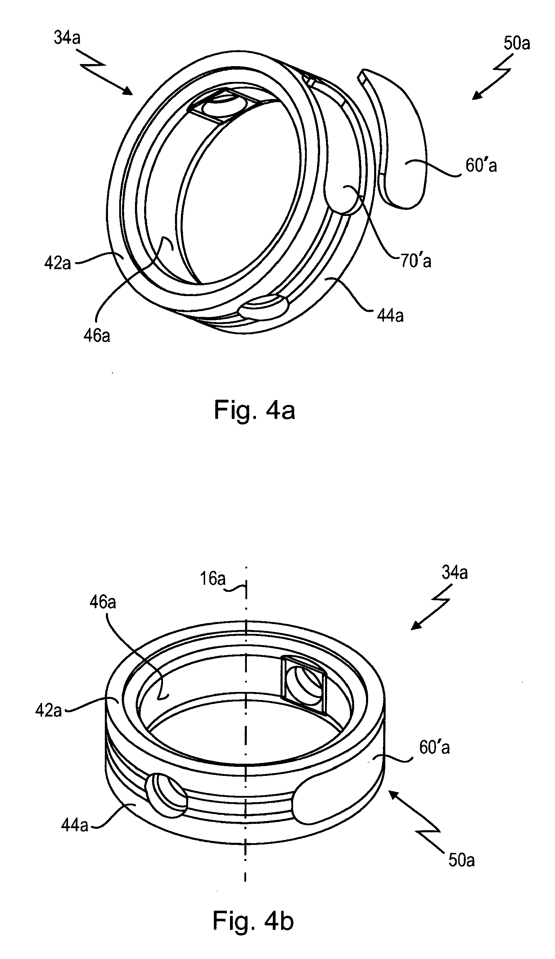

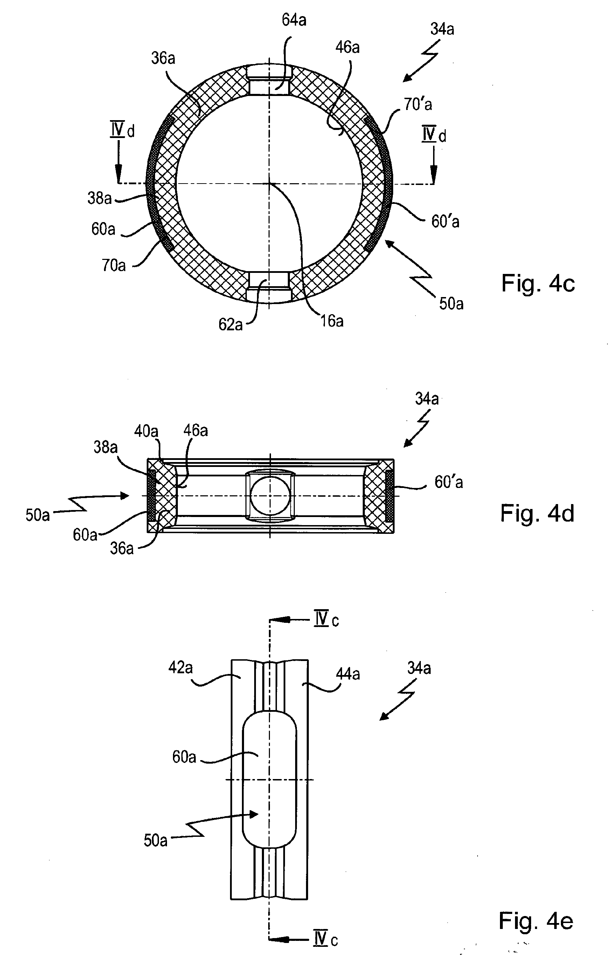

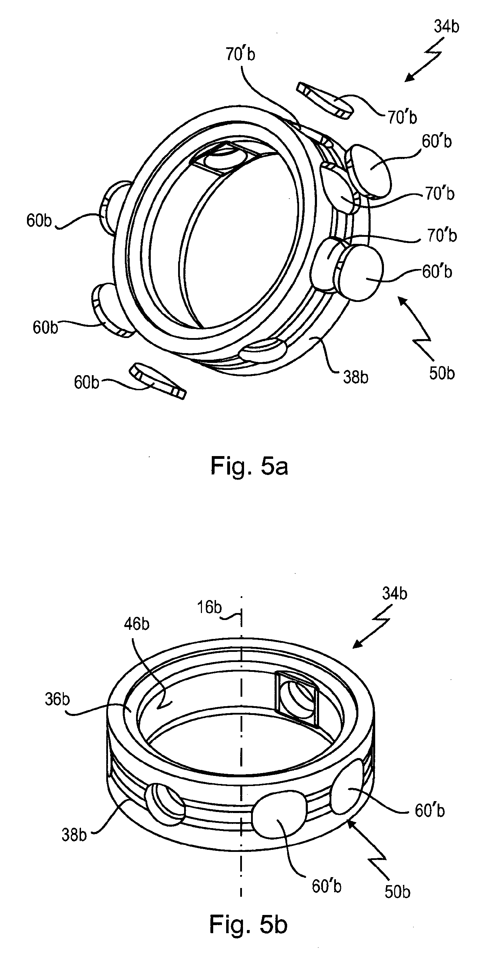

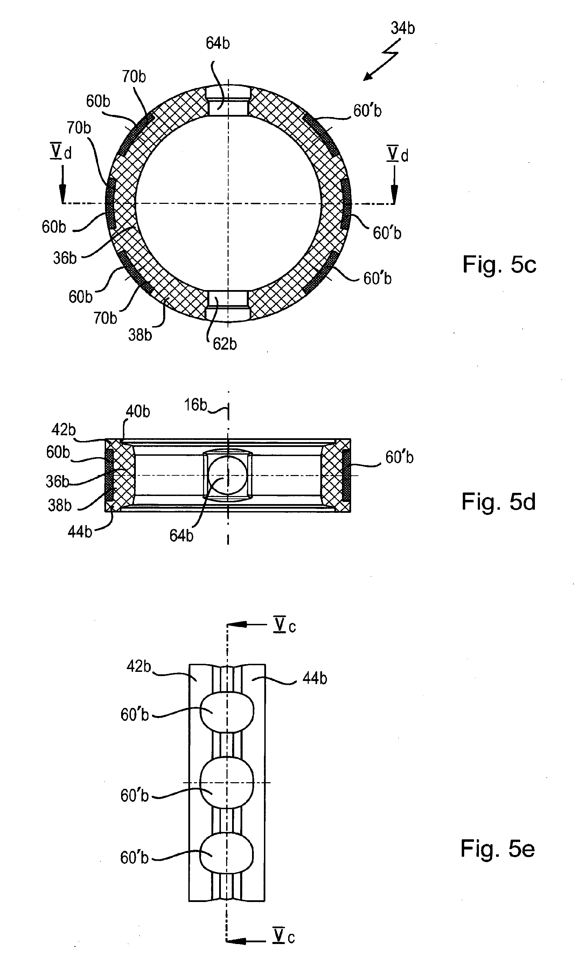

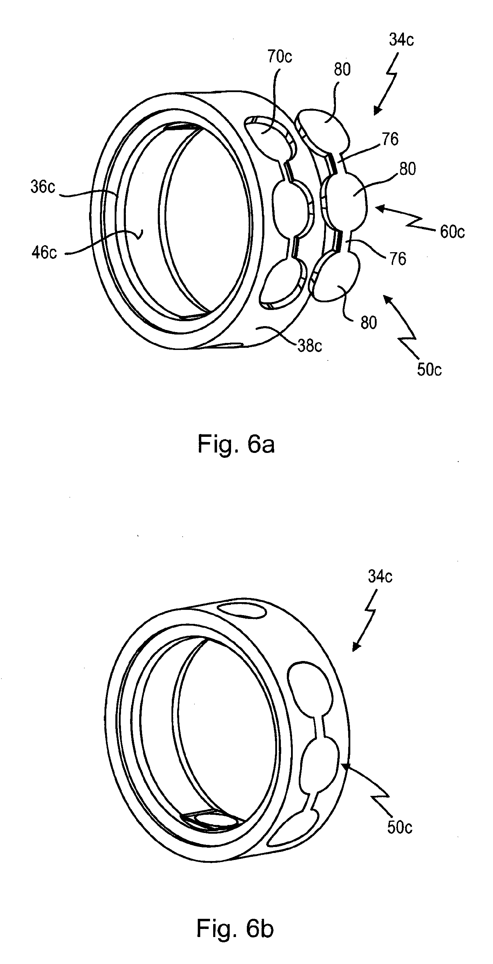

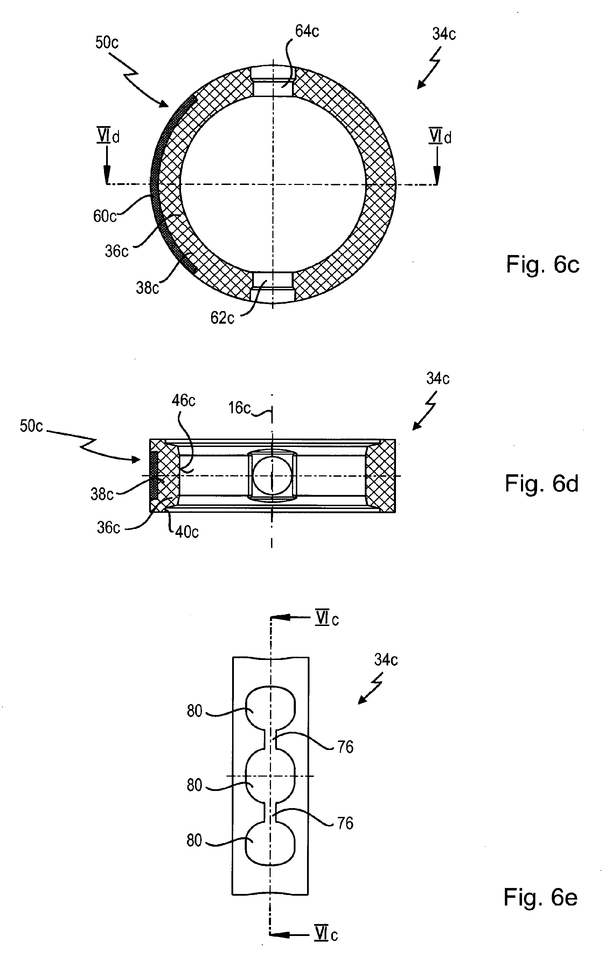

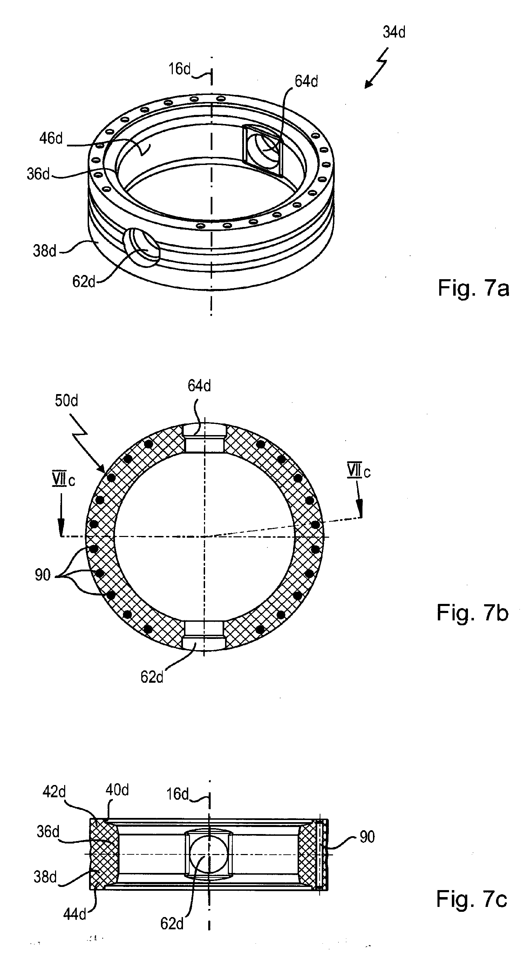

Ausführungsbeispiele der Erfindung sind in der Zeichnung dargestellt und werden mit Bezug auf diese hiernach näher beschrieben. Es zeigen:
Fig. 1a und 1b
   ein Klappenventil gemäß dem Stand der Technik, wobei Fig. 1a das Klappenventil in der Schließstellung und Fig. 1b das Klappenventil in einer geringfügig geöffneten Stellung zeigt;
Fig. 2a und 2b
   ein Ausführungsbeispiel eines erfindungsgemäßen Klappenventils, wobei Fig. 2a das Klappenventil im Längsschnitt parallel zur Längsachse in einem geringfügig geöffneten Zustand und Fig. 2b einen vergrößerten Ausschnitt des Klappenventils in Fig. 2a zeigt;
Fig. 3a bis 3d
   eine Dichtung für das Klappenventil in Fig. 2a gemäß einem Beispiel, wobei Fig. 3a die Dichtung in perspektivischer Darstellung; Fig. 3b ein Verstärkungselement der Dichtung in Alleinstellung und in perspektivischer Darstellung zeigt; Fig. 3c die Dichtung in einem Querschnitt quer zur Längsachse zeigt; Fig. 3d die Dichtung in einem Längsschnitt entlang der Linie IIId-IIId in Fig. 3c zeigt;
Fig. 4a bis 4e
   ein Ausführungsbeispiel einer Dichtung für das Klappenventil gemäß Fig. 2a, wobei Fig. 4a die Dichtung in perspektivischer Darstellung zeigt, wobei ein Verstärkungselement neben der Dichtung gezeigt ist, das aus der Dichtung herausgenommen worden ist; Fig. 4b die Dichtung im zusammengesetzten Zustand in perspektivischer Darstellung zeigt; Fig. 4c die Dichtung im Querschnitt quer zur Längsachse zeigt; Fig. 4d die Dichtung in einem Schnitt parallel zur Längsachse entlang der Linie IVd-IVd in fig. 4c zeigt; Fig. 4e eine Seitenansicht der Dichtung zeigt;
Fig. 5a bis 5e
   ein weiteres Ausführungsbeispiel einer Dichtung für das Klappenventil gemäß Fig. 2a, wobei Fig. 5a die Dichtung in perspektivischer Darstellung zeigt, wobei einzelne Verstärkungselemente aus der Dichtung herausgenommen sind; Fig. 5b die Dichtung in perspektivischer Darstellung zeigt, wobei die Verstärkungselemente in die Dichtung eingelegt sind; Fig. 5c die Dichtung in einem Querschnitt quer zur Längsachse zeigt; Fig. 5d die Dichtung in einem Schnitt entlang der Linie Vd-Vd in Fig. 5c zeigt; Fig. 5e die Dichtung in einer Seitenansicht zeigt;
Fig. 6a bis 6e
   ein weiteres Ausführungsbeispiel einer Dichtung für das Klappenventil gemäß Fig. 2a, wobei Fig. 6a die Dichtung in einer perspektivischen Darstellung zeigt, wobei ein Verstärkungselement aus der Dichtung herausgenommen ist; Fig. 6b die Dichtung in einer perspektivischen Darstellung zeigt, wobei das Verstärkungselement in die Dichtung eingelegt ist; Fig. 6c die Dichtung in einem Querschnitt quer zur Längsachse zeigt; Fig. 6d die Dichtung in einem Schnitt entlang der Linie VIc-VIc in Fig. 6c zeigt; Fig. 6e die Dichtung in einer Seitenansicht zeigt; und
Figuren 7a bis 7c
   ein weiteres Beispiel einer Dichtung für das Klappenventil gemäß Fig. 2a, wobei Fig. 7a die Dichtung in einer perspektivischen Darstellung zeigt; Fig. 7b die Dichtung in einem Querschnitt quer zur Längsachse zeigt; Fig. 7c die Dichtung in einem Schnitt entlang der Linie VIIc-VIIc in Fig. 7b zeigt.

Bevor die Erfindung im Einzelnen beschrieben wird, wird zunächst mit Bezug auf Fig. 1a und 1b ein Klappenventil 200 gemäß dem Stand der Technik beschrieben, um die bei einem solchen Klappenventil auftretenden technischen Probleme zu verdeutlichen.

Das Klappenventil 200 in Fig. 1a weist einen ersten Flansch 202 und einen zweiten Flansch 204 auf. Eine Längsachse des Klappenventils 200 ist mit 206 bezeichnet. Die Längsachse 206 ist diejenige geometrische Achse, auf die sich die nachfolgend verwendeten Begriffe "radial" und "axial" beziehen, wobei unter "axial" Richtungen zu verstehen sind, die parallel zur Längsachse 206 verlaufen, und unter "radial" solche Richtungen, die senkrecht zur Längsachse 206 mit Schnittpunkt auf der Längsachse 206 verlaufen.

Die Flansche 202 und 204 sind auf geeignete Weise, beispielsweise durch Verschraubung, axial zusammengehalten.

Der Flansch 202 weist einen rohrförmigen Fortsatz 208 und der Flansch 204 weist einen rohrförmigen Fortsatz 210 auf. In nicht dargestellter Weise ist das Klappenventil 200 in einer Rohrleitung angeordnet, die sich an die Fortsätze 208 bzw. 210 zu beiden Seiten des Klappenventils 200 anschließt. In einer solchen Rohrleitung wird ein Medium transportiert, das beispielsweise flüssig, gasförmig oder auch feststoffförmig sein kann.

Die Flansche 202 und 204 dienen u.a. der drehbaren Lagerung einer Klappe 212, die als Teller mit kreisförmigem Umfangsrand 214 ausgebildet ist.

In den Flanschen 202 und 204 gemeinsam ist eine ringförmige Nut 216 ausgebildet, die sich auf beide Flansche 202 und 204 verteilt. Die Nut 216 erstreckt sich vollumfänglich um die Längsachse 206.

Die Nut 216 weist einen radial äußeren Nutabschnitt 218, der im Schnitt parallel zur Längsachse 206, wie in Fig. 1a gezeigt, rechteckig ist, und einen radial inneren Nutabschnitt 220 auf, der sich radial nach innen verjüngt. Der radial innere Nutabschnitt 220 geht in den radial äußeren Nutabschnitt 218 über eine Stufe 222 über, so dass der radial äußere Nutabschnitt 218 in Richtung der Längsachse 206 eine größere Erstreckung aufweist als der radial innere Nutabschnitt 220.

In der Nut 216 ist eine Dichtung 224 angeordnet, die einen ringförmigen Dichtungskörper aus einem elastomeren Material aufweist. Die Dichtung 224 ist insgesamt einstückig und einteilig aus dem elastomeren Material, beispielsweise Gummi, gefertigt.

Der Dichtungskörper der Dichtung 224 weist eine zur geometrischen Kontur der Nut 216 komplementäre geometrische Außenkontur auf. Entsprechend weist der Dichtungskörper der Dichtung 224 einen radial inneren Wandabschnitt 226, der im radial inneren Nutabschnitt 220 angeordnet ist, und einen radial äußeren Wandabschnitt 228 auf, der im radial äußeren Nutabschnitt 218 angeordnet ist.

Entsprechend der Geometrie der Nut 216 geht der radial äußere Wandabschnitt 228 in den radial inneren Wandabschnitt 226 über eine Stufe 230 über, so dass Längsenden 232, 234 des radial äußeren Wandabschnitts 228 des Dichtungskörpers der Dichtung 224 in dem radial äußeren Nutabschnitt 218 formschlüssig gehalten sind.

Die Dichtung 224 ist in der Nut zwischen den beiden Flanschen 202 und 204 somit durch Formschluss gehalten, ohne jedoch in der Nut 216 eingeklebt oder auf sonstige Weise befestigt zu sein.

Fig. 1a zeigt das Klappenventil 200 in seiner Schließstellung, in der die Klappe 212 mit ihrem Umfangsrand 214 an einer Dichtfläche 236 des radial inneren Wandabschnitts 226 der Dichtung 224 dichtend in Anlage steht. Auf diese Weise kann kein Medium vom rohrförmigen Fortsatz 208 in den rohrförmigen Fortsatz 210 übertreten. Um eine bei hohen Drücken ausreichende Dichtigkeit zu gewährleisten, ist es erforderlich, dass die Dichtung 224 aus einem ausreichend weichen Elastomer besteht, damit der Umfangsrand 214 der Klappe 212 zur Erzielung der hohen Dichtigkeit mit der Dichtfläche 236 innig in Anlage steht und dabei das elastomere Material im Kontaktbereich auch etwas verdrängen kann.

Die entsprechend für die ausreichende Dichtigkeit geforderte Elastizität der Dichtung 224 führt jedoch zu folgendem Problem, das mit Bezug auf Fig. 1b beschrieben wird.

Zum Öffnen des Klappenventils 200 ist ein Drehantrieb (nicht dargestellt) vorgesehen, der die Klappe 212 um eine Drehachse, die in Fig. 1a und 1b senkrecht zur Zeichenebene verläuft und in Fig. 1b mit dem Bezugszeichen 238 versehen ist, dreht. Die vollständige Offenstellung des Klappenventils 200 ist dann erreicht, wenn die Klappe 212 parallel zur Längsachse 206 steht. Kritisch ist jedoch nicht die vollständige Offenstellung der Klappe 212, sondern eine anfänglich geringfügig geöffnete Stellung oder eine beinahe geschlossene Stellung, wie sie in Fig. 1b gezeigt ist. In dieser Stellung bildet sich zwischen der Dichtung 224 und dem Umfangsrand 214 der Klappe 212 ein Spalt, durch den das in der Rohrleitung, in der das Klappenventil 200 eingebaut ist, unter hohem Druck stehende Medium nun schlagartig mit entsprechend hoher Strömungsgeschwindigkeit hindurchströmt. Die Strömung ist in Fig. 1b mit Pfeilen 240 angedeutet. Diese schlagartig auftretende sehr hohe Strömungsgeschwindigkeit des Mediums bewirkt dabei einen statischen Unterdruck im Bereich der Dichtung 224 im Bereich ihrer Dichtfläche 236. Dieser statische Unterdruck übt auf die Dichtung 224 eine radial nach innen gerichtete Zugkraft aus, der die Dichtung 224 aufgrund ihrer Verformbarkeit nur unzureichend Widerstand bieten kann, je nachdem wie groß diese Zugkraft ist. Die Folge ist, dass der radial äußere Wandabschnitt 228 zwischen den beiden Längsenden 232 und 234 radial nach innen verbogen wird. Dies wiederum hat zur Folge, dass sich der axiale Abstand zwischen den Längsenden 232 und 234 verkürzt, wodurch die Dichtung 224 nicht mehr sicher in der Nut 216 durch Formschluss gehalten ist. Dabei kann es sogar vorkommen, dass ein oder beide Längsenden 232, 234 über einen Teilumfangsbereich vollständig aus dem radial äußeren Nutabschnitt herausgezogen werden. Wird die Klappe 212 dann wieder geschlossen, indem die Klappe 212 in die in Fig. 1a gezeigte Stellung gedreht wird, kann es passieren, dass der Umfangsrand 214 die Dichtung 224 dann vollständig aus der Nut 216 herauszieht oder die Dichtung 224 aufgrund des radial nach innen vorstehenden Dichtungsmaterials mit einer Kante des Flansches 202 oder 204 verklemmt, wodurch die Dichtung 224 beschädigt werden kann.

Durch die vorliegende Erfindung, die nachfolgend mit Bezug auf die weiteren Figuren beschrieben wird, wird dieses Problem vermieden.

Zunächst wird mit Bezug auf Fig. 2a ein erfindungsgemäßes Klappenventil, das mit dem allgemeinen Bezugszeichen 10 versehen ist, beschrieben.

Das Klappenventil 10 weist einen ersten Flansch 12 und einen zweiten Flansch 14 auf, die identisch zu den Flanschen 202 und 204 des Klappenventils 200 ausgebildet sind.

Eine Längsachse des Klappenventils 10 ist mit 16 bezeichnet.

Der Flansch 12 weist einen rohrförmigen Fortsatz 18 und der Flansch 14 einen rohrförmigen Fortsatz 20 auf.

Das Klappenventil 10 weist eine Klappe 22 auf, die mit der Klappe 212 des Klappenventils 200 identisch ist. Ein Umfangsrand 24 der Klappe 22, die wiederum als Teller ausgebildet ist, ist kreisförmig ausgebildet.

In den Flanschen 12 und 14 ist eine Nut 26 ausgebildet, deren geometrische Kontur identisch mit der geometrischen Kontur der Nut 216 des Klappenventils 200 ist. Entsprechend weist die Nut 26 einen radial äußeren Nutabschnitt 28 und einen radial inneren Nutabschnitt 30 auf, wobei der radial äußere Nutabschnitt 28 über eine Stufe 32 in den radial inneren Nutabschnitt 30 übergeht.

In der Nut 26 ist eine Dichtung 34 aus einem elastomeren Material angeordnet, wobei das elastomere Material der Dichtung 34 das Gleiche sein kann wie das elastomere Material der Dichtung 224 des Klappenventils 200, also entsprechend weich sein kann.

Entsprechend der Geometrie der Nut 26 weist die Dichtung 34 einen Dichtungskörper auf, der einen radial inneren Wandabschnitt 36 und einen radial äußeren Wandabschnitt 38 aufweist, wobei der radial innere Wandabschnitt über eine Stufe 40 in den radial äußeren Wandabschnitt 38 übergeht und der radial äußere Wandabschnitt 38 entsprechend eine größere Längserstreckung in Richtung der Längsachse 16 aufweist als der radial innere Wandabschnitt 36.

Der radial äußere Wandabschnitt 38 ist formschlüssig in dem radial äußeren Nutabschnitt 28 der Nut 26 aufgenommen, so dass Längsenden 42 und 44 des radial äußeren Wandabschnitts 38 von dem radial äußeren Nutabschnitt 28 eingefasst sind, wie dies aus Fig. 2a hervorgeht.

Der radial innere Wandabschnitt 36 der Dichtung 34 bildet eine radial innere Dichtfläche 46 für die Klappe 22 aus.

Bis hierhin ist das Klappenventil 10 und ist die Dichtung 34 mit dem Klappenventil 200 bzw. der Dichtung 224 identisch.

Die Dichtung 34 unterscheidet sich jedoch grundlegend von der Dichtung 224 dadurch, dass der radial äußere Wandabschnitt 38 eine Verstärkung 50 aus einem Material aufweist, das steifer ist als das elastomere Material, aus dem die Dichtung 34 im Übrigen besteht. Die Verstärkung 50 bewirkt eine axiale Stützung des radial äußeren Wandabschnitts 38, so dass sich bei einer auf den radial inneren Wandabschnitt 36 radial nach innen wirkenden Zugkraft die Längsenden 42 und 44 des radial äußeren Wandabschnitts 38 nicht aufeinander zubewegen können. Somit kann keine axiale Verkürzung des Abstandes zwischen den beiden Längsenden 42 und 44 des radial äußeren Wandabschnitts 38 auftreten, die dazu Anlass geben könnte, dass die Längsenden 42 und 44 aus dem Formschluss mit dem radial äußeren Nutabschnitt 28 geraten, wie dies bei der Dichtung 224 gemäß Fig. 1b der Fall ist. Die Verstärkung 50 gewährleistet vielmehr, dass die beiden Längsenden 42 und 44 des radial äußeren Wandabschnitts 38 im Formschluss mit dem radial äußeren Nutabschnitt 28 verbleiben, wie in Fig. 2a gezeigt ist, in der das Klappenventil 10 wie in Fig. 1a geringfügig geöffnet ist.

Wie aus Fig. 2a hervorgeht, erstreckt sich die Verstärkung 50 des radial äußeren Wandabschnitts 38 in Längsrichtung nicht über die gesamte axiale Länge des radial äußeren Wandabschnitts 38, sondern ist auf den Bereich zwischen den Längsenden 42 und 44 beschränkt.

Fig. 2b zeigt den Ausschnitt A in Fig. 2a in vergrößertem Maßstab. Die axiale Erstreckung der Verstärkung 50 und/oder die radiale Dicke der Verstärkung 50 ist so gewählt, dass ein kleinster Abstand a eines Längsendes 52 der Verstärkung 50 vom radial und axial inneren Ende 54 des radial äußeren Nutabschnitts 28 bzw. vom radial und axial inneren Ende der Stufe zum radial inneren Wandabschnitt 36 kleiner ist als ein Abstand b dieses Längsendes 52 der Verstärkung 50 vom axial äußeren Ende 56 des radial äußeren Nutabschnitts 28 bzw. vom entsprechenden axial äußeren Ende des radial äußeren Wandabschnitts 38. Auf diese Weise kann das Längsende 44 (das Gleiche gilt für das entsprechende Längsende 42) nicht durch den durch den Abstand a definierten Spalt zwischen der Verstärkung 50 und der Nutbegrenzung im Bereich der Stufe 32 herausgezogen werden, weil das Längsende 44 eine größere Abmessung aufweist als der durch den Abstand a gebildete Spalt.

Die radiale Dicke der Verstärkung 50 ist dabei nicht größer als die radiale Dicke d des radial äußeren Wandabschnitts 38, wie in Fig. 2b dargestellt ist. Auf diese Weise weist der radial innere Wandabschnitt 36 der Dichtung 34 eine ausreichende Verformbarkeit zur Gewährleistung einer hohen Dichtigkeit im Zusammenwirken mit der Klappe 22 auf.

Mit Bezug auf die weiteren Figuren werden nun verschiedene Ausführungsbeispiele für die Realisierung der Verstärkung 50 näher beschrieben.

In Figuren 3a, 3c, 3d ist die Dichtung 34 in Alleinstellung gezeigt. Fig. 3b zeigt die Verstärkung 50 in Alleinstellung, das heißt in von der Dichtung 34 abgenommenem Zustand.

In dem in Figuren 3a bis 3d gezeigten Ausführungsbeispiel ist die Verstärkung durch ein einziges Verstärkungselement 60 gebildet, das als sich vollumfänglich um die Längsachse erstreckendes Ringband ausgebildet ist. Die axiale Stützwirkung des Verstärkungselements 60 auf den radial äußeren Wandabschnitt 38 des Dichtungskörpers der Dichtung 34 erstreckt sich somit vollumfänglich um die Längsachse 16.

Der Dichtungskörper der Dichtung 34 weist des Weiteren zwei durchgehende Öffnungen 62 und 64 auf, die der Durchführung der Achse der Klappe 22 des Klappenventils 10 dienen. Da sich das Verstärkungselement 60 vollumfänglich um die Längsachse 16 erstreckt, weist auch das Verstärkungselement 60 entsprechende Öffnungen 66 und 68 auf.

Aus Fig. 3d geht hervor, dass die axiale Erstreckung des Verstärkungselements 60 kleiner ist als die axiale Erstreckung des radial äußeren Wandabschnitts 38, und dass das Verstärkungselement 60 in axialer Richtung zwischen den beiden Längsenden 42 und 44 des radial äußeren Wandabschnitts 38 angeordnet ist.

Das Verstärkungselement 60 ist als Einlegeteil ausgebildet, wobei der radial äußere Wandabschnitt 38 an seiner radial äußeren Außenseite eine sich vollumfänglich um die Längsachse 16 erstreckende Ausnehmung 70 aufweist, in die das Verstärkungselement 60 eingelegt ist.

Das Verstärkungselement 60 ist in der Ausnehmung 70 lose eingelegt, kann jedoch auch in der Ausnehmung durch Kleben oder durch Einklicken festgelegt sein. Ein Einklicken des Verstärkungselements 60 kann dadurch realisiert sein, dass die axialen Ränder 72, 74 der Ausnehmung 70 das Verstärkungselement außenseitig geringfügig übergreifen (nicht dargestellt).

In Figuren 4a bis 4e ist ein weiteres Ausführungsbeispiel einer Dichtung 34a gezeigt, wobei solche Merkmale der Dichtung 34a, die mit entsprechenden Merkmalen der Dichtung 34 identisch oder vergleichbar sind, mit den gleichen Bezugszeichen, ergänzt um ein a versehen sind.

Im Unterschied zu der Dichtung 34 ist die Verstärkung 50a bei diesem Ausführungsbeispiel durch zwei in Umfangsrichtung um die Längsachse 16a getrennte Verstärkungselemente 60a, 60'a gebildet, die sich jeweils nur teilumfänglich an dem radial äußeren Wandabschnitt 38a erstrecken. Dabei sind die beiden Verstärkungselemente 60a, 60'a einander gegenüberliegend und im Bereich außerhalb der Öffnungen 62a und 64a des Dichtungskörpers der Dichtung 34a angeordnet.

Die beiden Verstärkungselemente 60a und 60'a sind als Ringbandabschnitte ausgebildet.

Entsprechend ihrer nur teilumfänglichen Erstreckung sind die Verstärkungselemente 60a, 60'a entsprechend in sich nur teilumfänglich erstreckende Ausnehmungen 70a, 70'a eingelegt.

Die Dichtung 34a kann anstelle der Dichtung 34 in dem Klappenventil 10 verwendet werden.

Die axiale Stützwirkung der Verstärkungselemente 60a, 60'a erstreckt sich bei der Dichtung 34a zwar nur über einen Teilumfang des radial äußeren Wandabschnitts 38a, jedoch ist diese umfänglich begrenzte stützende Wirkung ausreichend, die Gefahr zu vermindern, dass die Dichtung 34a beim Auftreten eines statischen Unterdrucks aus der Nut 26 herausgezogen wird, da diese Gefahr im Bereich der Öffnungen 62a und 64a, durch die die Achse der Klappe 22 hindurchgeht, bereits durch die Achse vermindert ist, die ebenfalls eine axiale Stützwirkung auf den radial äußeren Wandabschnitt 38a ausübt.

Figuren 5a bis 5e zeigen ein weiteres Ausführungsbeispiel einer Dichtung 34b zur Verwendung in dem Klappenventil 10 anstelle der Dichtung 34, wobei solche Merkmale der Dichtung 34b, die mit entsprechenden Merkmalen der Dichtung 34 identisch oder vergleichbar sind, mit den gleichen Bezugszeichen, ergänzt um ein b, versehen sind.

Bei diesem Ausführungsbeispiel weist die Verstärkung 50b insgesamt sechs in Umfangsrichtung getrennte Verstärkungselemente 60b, 60'b auf, die um die Längsachse 16b verteilt am radial äußeren Wandabschnitt 38b angeordnet sind. Die Verstärkungselemente 60b, 60'b sind knopfförmig bzw. plättchenförmig ausgebildet. Auch in diesem Ausführungsbeispiel sind die Verstärkungselemente 60b, 60'b als Einlegeteile ausgebildet, die in entsprechende Ausnehmungen 70b, 70'b auf der radial äußeren Außenseite des radial äußeren Wandabschnitts 38b vorhanden sind.

In Figuren 6a bis 6e ist ein weiteres Ausführungsbeispiel einer Dichtung 34c zur Verwendung in dem Klappenventil 10 anstelle der Dichtung 34 dargestellt, wobei solche Merkmale der Dichtung 34c, die mit Merkmalen der Dichtung 34 identisch oder vergleichbar sind, mit den gleichen Bezugszeichen, ergänzt um ein c versehen sind.

Die Dichtung 34c weist eine Verstärkung 50c auf, die ähnlich zu der Verstärkung 50b der Dichtung 34b ist, wobei die drei Verstärkungselemente 60b der Dichtung 34b zu einem einteiligen und einstückigen Verstärkungselement 60c zusammengefasst sind. Dies ist dadurch realisiert, dass das Verstärkungselement 60c drei Verstärkungselementabschnitte 80 aufweist, die durch jeweils einen schmalen Steg 76, die sich jeweils in Umfangsrichtung um die Längsachse 16 erstrecken, verbunden sind.

Bei der Dichtung 34c ist die Verstärkung 50c nur auf einer Seite der Öffnungen 62c und 64c dargestellt, jedoch versteht es sich, dass bei diesem Ausführungsbeispiel auch auf der gegenüberliegenden Seite der Öffnungen 62c und 64c ein entsprechendes Verstärkungselement 60c vorgesehen sein kann, wie dies bei den Dichtungen 34a und 34b der Fall ist.

Die Ausnehmung 70c im radial äußeren Wandabschnitt 38c ist entsprechend der Kontur des Verstärkungselements 60c komplementär dazu ausgebildet.

Während bei den vorhergehenden Ausführungsbeispielen die Verstärkungselemente 60a, 60'a, 60b, 60'b und 60c als Einlegeteile ausgebildet sind, die in jeweilige Ausnehmungen 70a, 70'a, 70b, 70'b und 70c an der radial äußeren Außenseite des radial äußeren Wandabschnitts 38a, 38b, 38c eingelegt sind, ist in Figuren 7a bis 7c ein Ausführungsbeispiel einer Dichtung 34b dargestellt, bei der die Verstärkung 50d in das elastomere Material des radial äußeren Wandabschnitts 38d eingebettet bzw. eingearbeitet ist.

Bei der Dichtung 34d wird die Verstärkung 50d durch eine Mehrzahl an stiftförmigen Elementen 90 gebildet, wobei bei dem gezeigten Ausführungsbeispiel insgesamt zwanzig derartiger stiftförmiger Elemente 90 vorhanden sind, die sich in Richtung parallel zur Längsachse 16d erstrecken und umfänglich um die Längsachse 16d im radial äußeren Wandabschnitt 38d verteilt sind.

Die stiftförmigen Elemente 90 können bspw. Metallstifte sein.

Die stiftförmigen Elemente 90 können eine axiale Länge in Richtung der Längsachse 16d aufweisen, die kleiner ist als die axiale Länge des radial äußeren Wandabschnitts 38d, und können dabei auf den Bereich zwischen den Längsenden 42d und 44d des radial äußeren Wandabschnitts 38d beschränkt sein. Die stiftförmigen Elemente 90 können sich jedoch auch über die gesamte axiale Länge des radial äußeren Wandabschnitts 38d erstrecken.

Es, versteht sich, dass eine Verstärkung des radial äußeren Wandabschnitts der jeweiligen Dichtung auch durch Einarbeiten einer textilen Verstärkung oder durch Verwendung eines gegenüber dem elastomeren Material der übrigen Dichtung härteren Materials für den radial äußeren Wandabschnitt realisiert werden kann.

## Patentansprüche

1. Klappenventil, mit einer Dichtung (34a; 34b; 34c), die einen ringförmigen Dichtungskörper aus einem elastomeren Material aufweist, und mit einer ringförmigen Nut (26) zur Aufnahme der Dichtung (34a; 34b; 34c), wobei der Dichtungskörper einen in Bezug auf eine Längsachse (16a; 16b; 16c) des Dichtungskörpers radial inneren Wandabschnitt (36a; 36b; 36c), der eine Dichtfläche (46a; 46b; 46c) aufweist, und einen radial äußeren Wandabschnitt (38a; 38b; 38c) aufweist, der eine größere Längserstreckung in Richtung der Längsachse (16a; 16b; 16c) aufweist als der radial innere Wandabschnitt (36a; 36b; 36c), wobei der radial äußere Wandabschnitt (38a; 38b; 38c) mit dem radial inneren Wandabschnitt (36a; 36b; 36c) eine Stufe (40a; 40b; 40c) bildet, und wobei der radial äußere Wandabschnitt (38a; 38b; 38c) formschlüssig in einem radial äußeren Nutabschnitt (28) der Nut (26) aufgenommen ist, so dass Längsenden (42a, 44a; 42b, 44b; 42c, 44c) des radial äußeren Wandabschnitts (38a; 38b; 38c) in dem radial äußeren Nutabschnitt (28) gehalten sind, wobei der radial äußere Wandabschnitt (38a; 38b; 38c) eine Verstärkung (50a; 50b; 50c) aus einem Material aufweist, das steifer ist als das elastomere Material, wobei die Verstärkung (50a; 50b; 50c) den radial äußeren Wandabschnitt (38a; 38b; 38c) axial stützt, **dadurch gekennzeichnet, dass** die Verstärkung (50a; 50b) durch zumindest zwei in Umfangsrichtung getrennte Verstärkungselemente (60a, 60'a; 60b, 60'b) gebildet ist, die sich jeweils teilumfänglich über den radial äußeren Wandabschnitt (38a; 38b) erstrecken, wobei die Verstärkungselemente (60a, 60'a; 60b, 60'b) als Ringbandabschnitte oder Plättchen ausgebildet sind, und dass die Verstärkungselemente (60; 60a, 60'a; 60b, 60'b; 60c) als Einlegeteile ausgebildet sind, die in eine jeweilige Ausnehmung (70a, 70'a; 70b, 70'b; 70c) an der radial äußeren Außenseite des radial äußeren Wandabschnitts (38a; 38b; 38c) eingelegt sind.

2. Klappenventil nach Anspruch 1, **dadurch gekennzeichnet, dass** sich die Verstärkung (50a; 50b; 50c) des radial äußeren Wandabschnitts (38a; 38b; 38c) in Längsrichtung nicht über die gesamte axiale Länge des radial äußeren Wandabschnitts (38a; 38b; 38c) erstreckt und auf den Bereich zwischen den Längsenden (42a, 44a; 42b, 44b; 42c, 44c) beschränkt ist.

3. Klappenventil nach Anspruch 1 oder 2, **dadurch gekennzeichnet, dass** ein kleinster Abstand (a) eines Längsendes der Verstärkung vom radial und axial inneren Ende des radial äußeren Nutabschnitts kleiner ist als ein Abstand (b) dieses Längsendes der Verstärkung vom axial äußeren Ende des radial äußeren Nutabschnitts.

4. Klappenventil nach einem der Ansprüche 1 bis 3, **dadurch gekennzeichnet, dass** die Verstärkung (50a; 50b; 50c) eine radiale Dicke aufweist, die maximal so groß ist wie die radiale Dicke des radial äußeren Wandabschnitts (38; 38a; 38b; 38c; 38d).

5. Klappenventil nach einem der Ansprüche 1 bis 4, **dadurch gekennzeichnet, dass** die Verstärkung (50c) zumindest ein Verstärkungselement (60c) aufweist, das aus einer Mehrzahl von Verstärkungselementabschnitten (80) aufgebaut ist, von denen jeweils benachbarte über jeweils einen sich in Umfangsrichtung erstreckenden in Längsrichtung schmalen Steg (76) verbunden sind.

6. Klappenventil nach einem der Ansprüche 1 bis 5, **dadurch gekennzeichnet, dass** die Verstärkungselemente (60a, 60'a; 60b, 60'b; 60c) in der Ausnehmung (70a, 70'a; 70b, 70'b; 70c) durch Kleben oder durch Einklicken festgelegt oder lose eingelegt sind.

7. Dichtung für ein Klappenventil, mit einem ringförmigen Dichtungskörper aus einem elastomeren Material, wobei der Dichtungskörper einen in Bezug auf eine Längsachse (16a; 16b; 16c) des Dichtungskörpers radial inneren Wandabschnitt (36a; 36b; 36c), der eine Dichtfläche (46a; 46b; 46c) aufweist, und einen radial äußeren Wandabschnitt (38a; 38b; 38c) aufweist, der eine größere Längserstreckung in Richtung der Längsachse (16; 16a; 16b; 16c; 16d) aufweist als der radial innere Wandabschnitt (36a; 36b; 36c), wobei der radial äußere Wandabschnitt (38a; 38b; 38c) mit dem radial inneren Wandabschnitt (36a; 36b; 36c) eine Stufe (40a; 40b; 40c) bildet, wobei der radial äußere Wandabschnitt (38a; 38b; 38c) eine Verstärkung (50a; 50b; 50c) aus einem Material aufweist, das steifer ist als das elastomere Material, wobei die Verstärkung (50a; 50b; 50c) den radial äußeren Wandabschnitt (38a; 38b; 38c) axial stützt, **dadurch gekennzeichnet, dass** die Verstärkung (50a; 50b) durch zumindest zwei in Umfangsrichtung getrennte Verstärkungselemente (60a, 60'a; 60b, 60'b) gebildet ist, die sich jeweils teilumfänglich über den radial äußeren Wandabschnitt (38a; 38b) erstrecken, wobei die Verstärkungselemente (60a, 60'a; 60b, 60'b) als Ringbandabschnitte oder Plättchen ausgebildet sind, und dass die Verstärkungselemente (60; 60a, 60'a; 60b, 60'b; 60c) als Einlegeteile ausgebildet sind, die in eine jeweilige Ausnehmung (70a, 70'a; 70b, 70'b; 70c) an der radial äußeren Außenseite des radial äußeren Wandabschnitts (38a; 38b; 38c) eingelegt sind.

8. Dichtung nach Anspruch 7, **dadurch gekennzeichnet, dass** sich die Verstärkung (50a; 50b; 50c) des radial äußeren Wandabschnitts (38a; 38b; 38c) in Längsrichtung nicht über die gesamte axiale Länge des radial äußeren Wandabschnitts (38a; 38b; 38c;) erstreckt und auf den Bereich zwischen den Längsenden (42a, 44a; 42b, 44b; 42c, 44c) beschränkt ist.

9. Dichtung nach Anspruch 7 oder 8, **dadurch gekennzeichnet, dass** ein kleinster Abstand (a) eines Längsendes der Verstärkung vom radial und axial inneren Ende der Stufe zum radial inneren Wandabschnitt kleiner ist als ein Abstand (b) dieses Längsendes der Verstärkung vom axial äußeren Ende des radial äußeren Wandabschnitts.

10. Dichtung nach einem der Ansprüche 7 bis 9, **dadurch gekennzeichnet, dass** die Verstärkung (50a; 50b; 50c) eine radiale Dicke aufweist, die maximal so groß ist wie die radiale Dicke des radial äußeren Wandabschnitts (38a; 38b; 38c).

11. Dichtung nach einem der Ansprüche 7 bis 10, **dadurch gekennzeichnet, dass** die Verstärkung (50c) zumindest ein Verstärkungselement (60c) aufweist, das aus einer Mehrzahl von Verstärkungselementabschnitten (80) aufgebaut ist, von denen jeweils benachbarte über jeweils einen sich in Umfangsrichtung erstreckenden in Längsrichtung schmalen Steg (76) verbunden sind.

12. Dichtung nach einem der Ansprüche 7 bis 11, **dadurch gekennzeichnet, dass** die Verstärkungselemente (60a, 60'a; 60b, 60'b; 60c) in der Ausnehmung (70a, 70'a; 70b, 70'b; 70c) durch Kleben oder durch Einklicken festgelegt oder lose eingelegt ist.

## Claims

1. Flap valve, comprising a seal (34a; 34b; 34c) having an annular seal body of an elastomer material, and an annular groove (26) for receiving the seal (34a; 34b; 34c), wherein the seal body has, with respect to a longitudinal axis (16a;16b;16c) of the seal body, a radially inner wall section (36a; 36b; 36c) having a seal surface (46a; 46b; 46c) and a radially outer wall section (38a; 38b; 38c) having a larger longitudinal extension in direction of the longitudinal axis (16a; 16b; 16c) than the radially inner wall section (36a; 36b; 36c), wherein the radially outer wall section (38a; 38b; 38c) forms a step (40a; 40b; 40c) with the radially inner wall section (36a; 36b; 36c), and wherein the radially outer wall section (38a; 38b; 38c) is received in a radially outer groove section (28) of the groove (26) in form-fit manner so that longitudinal ends (42a, 44a; 42b, 44b; 42c, 44c) of the radially outer wall section (38a; 38b; 38c) are held in the radially outer groove section (28), wherein the radially outer wall section (38a; 38b; 38c) has a reinforcement (50a; 50b; 50c) from a material being stiffer than the elastomer material, wherein the reinforcement (50a; 50b; 50c) axially supports the radially outer wall section (38a; 38b; 38c), **characterized in that** the reinforcement (50a; 50b) is formed by at least two reinforcement elements (60a, 60'a; 60b, 60'b) separated in circumferential direction, each of which extends over a partial circumference of the radially outer wall section (38a; 38b), wherein the reinforcement elements (60a, 60'a; 60b, 60'b) are configured as annular band sections or small plates, and that the reinforcement elements (60; 60a, 60'a; 60b, 60'b; 60c) are configured as inlay pieces each of which being inlaid in a respective recess (70a, 70'a; 70b, 70'b; 70c) on the radially outer side of the radially outer wall section (38a; 38b; 38c).

2. Flap valve according to claim 1, **characterized in that** the reinforcement (50a; 50b; 50c) of the radially outer wall section (38a; 38b; 38c) does not extend over the total axial length of the radially outer wall section (38a; 38b; 38c) in longitudinal direction, and is limited to the region between the longitudinal ends (42a, 44a; 42b, 44b; 42c, 44c).

3. Flap valve according to claim 1 or 2, **characterized in that** the smallest distance (a) of a longitudinal end of the reinforcement from the radially and axially inner end of the radially outer groove section is smaller than a distance (b) of this longitudinal end of the reinforcement from the axially outer end of the radially outer groove section.

4. Flap valve according to anyone of claims 1 to 3, **characterized in that** the reinforcement (50a; 50b; 50c) has a radial thickness which is maximally as large as the radial thickness of the radially outer wall section (38a, 38b; 38c; 38d).

5. Flap valve according to anyone of claims 1 to 4, **characterized in that** the reinforcement (50c) has at least one reinforcement element (60c) built up from a plurality of reinforcement element sections (80), respective adjacent reinforcement element sections of which are connected via a web (76) extending in circumferential direction and being narrow in longitudinal direction.

6. Flap valve according to anyone of claims 1 to 5, **characterized in that** the reinforcement elements (60a, 60'a; 60b, 60'b; 60c) are fixed in the recess (70a, 70'a; 70b, 70'b; 70c) by gluing or by clicking or are loosely inlaid.

7. Seal for a flap valve, comprising an annular seal body of an elastomer material, wherein the seal body has, with respect to a longitudinal axis (16a; 16b; 16c) of the seal body, a radially inner wall section (36a; 36b; 36c) having a seal surface (46a; 46b; 46c), and a radially outer wall section (38a; 38b; 38c) having a larger longitudinal extension in direction of the longitudinal axis (16; 16a; 16b; 16c; 16d) than the radially inner wall section (ends (36a; 36b; 36c), wherein the radially outer wall section (38a; 38b; 38c) forms a step with the radially inner wall section (36a; 36b; 36c), wherein the radially outer wall section (38a; 38b; 38c) has a reinforcement (50a; 50b; 50c) of a material being stiffer than the elastomer material, wherein the reinforcement (50a; 50b; 50c) axially supports the radially outer wall section (38a; 38b; 38c), **characterized in that** the reinforcement (50a; 50b) is formed by at least two reinforcement elements (60a, 60'a; 60b, 60'b) separated in circumferential direction, each of which extends over a partial circumference of the radially outer wall section (38a; 38b), wherein the reinforcement elements (60a, 60'a; 60b, 60'b) are configured as annular band sections or small plates, and that the reinforcement elements (60; 60a, 60'a; 60b, 60'b; 60c) are configured as inlay pieces each of which being inlaid in a respective recess (70a, 70'a; 70b, 70'b; 70c) on the radially outer side of the radially outer wall section (38a; 38b; 38c).

8. Seal according to claim 7, **characterized in that** the reinforcement (50a; 50b; 50c) of the radially outer wall section (38a; 38b; 38c) does not extend over the total axial length of the radially outer wall section (38a; 38b; 38c) in longitudinal direction, and is limited to the region between the longitudinal ends (42a, 44a; 42b, 44b; 42c, 44c).

9. Seal according to claim 7 or 8, **characterized in that** the smallest distance (a) of a longitudinal end of the reinforcement from the radially and axially inner end of the step to the radially inner wall section is smaller than a distance (b) of this longitudinal end of the reinforcement from the axially outer end of the radially outer wall section.

10. Seal according to anyone of claims 7 to 9, **characterized in that** the reinforcement (50a; 50b; 50c) has a radial thickness which is maximally as large as the radial thickness of the radially outer wall section (38a, 38b; 38c; 38d).

11. Seal according to anyone of claims 7 to 10, **characterized in that** the reinforcement (50c) has at least one reinforcement element (60c) built up from a plurality of reinforcement element sections (80), respective adjacent reinforcement element sections of which are connected via a web (76) extending in circumferential direction and being narrow in longitudinal direction.

12. Seal according to anyone of claims 7 to 11, **characterized in that** the reinforcement elements (60a, 60'a; 60b, 60'b; 60c) are fixed in the recess (70a, 70'a; 70b, 70'b; 70c) by gluing or by clicking or are loosely inlaid.

## Revendications

1. Soupape à clapet, comprenant un joint d'étanchéité (34a ; 34b ; 34c), qui présente un corps d'étanchéité de forme annulaire composé d'un matériau élastomère, et comprenant une rainure (26) de forme annulaire servant à loger le joint d'étanchéité (34a ; 34b ; 34c), sachant que le corps d'étanchéité présente une section de paroi radialement intérieure (36a; 36b ; 36c) par rapport à un axe longitudinal (16a ; 16b ; 16c) du corps d'étanchéité, laquelle présente une face étanche (46a ; 46b ; 46c), et une section de paroi radialement extérieure (38a ; 38b ; 38c), laquelle présente une extension longitudinale en direction de l'axe longitudinal (16a ; 16b ; 16c) plus grande que la section de paroi radialement intérieure (36a ; 36b ; 36c), sachant que la section de paroi radialement extérieure (38a ; 38b ; 38c) forme avec la section de paroi radialement intérieure (36a ; 36b ; 36c) un palier (40a ; 40b ; 40c), et sachant que la section de paroi radialement extérieure (38a ; 38b ; 38c) est logée par complémentarité de forme dans une section de rainure radialement extérieure (28) de la rainure (26) de sorte que des extrémités longitudinales (42a, 44a ; 42b, 44b ; 42c, 44c) de la section de paroi radialement extérieure (38a ; 38b ; 38c) sont maintenues dans la section de rainure radialement extérieure (28), sachant que la section de paroi radialement extérieure (38a ; 38b ; 38c) présente un renforcement (50a ; 50b ; 50c) composé d'un matériau qui est plus rigide que le matériau élastomère, sachant que le renforcement (50a ; 50b ; 50c) supporte axialement la section de paroi radialement extérieure (38a ; 38b ; 38c), **caractérisée en ce que** le renforcement (50a ; 50b) est formé par au moins deux éléments de renforcement (60a, 60'a ; 60b, 60'b) séparés dans la direction périphérique, lesquels s'étendent respectivement en partie de manière périphérique sur la section de paroi radialement extérieure (38a ; 38b), sachant que les éléments de renforcement (60a ; 60'a ; 60b, 60'b) sont réalisés sous la forme de sections de bande annulaire ou de petites plaques, et **en ce que** les éléments de renforcement (60 ; 60a, 60'a ; 60b, 60'b ; 60c) sont réalisés sous la forme de pièces d'insertion, qui sont placées dans un évidement (70a, 70'a ; 70b, 70'b ; 70c) respectif au niveau du côté extérieur radialement extérieur de la section de paroi radialement extérieure (38a ; 38b ; 38c).

2. Soupape à clapet selon la revendication 1, **caractérisée en ce que** le renforcement (50a ; 50b ; 50c) de la section de paroi radialement extérieure (38a ; 38b ; 38c) dans la direction longitudinale ne s'étend pas sur la totalité de la longueur axiale de la section de paroi radialement extérieure (38a ; 38b ; 38c) et est limité à la zone entre les extrémités longitudinales (42a, 44a ; 42b, 44b ; 42c, 44c).

3. Soupape à clapet selon la revendication 1 ou 2, **caractérisée en ce qu'**une distance la plus petite (a) entre une extrémité longitudinale du renforcement et une extrémité radialement et axialement intérieure de la section de rainure radialement extérieure est inférieure à une distance (b) entre ladite extrémité longitudinale du renforcement et l'extrémité axialement extérieure de la section de rainure radialement extérieure.

4. Soupape à clapet selon l'une quelconque des revendications 1 à 3, **caractérisée en ce que** le renforcement (50a ; 50b ; 50c) présente une épaisseur radiale, qui est au maximum aussi grande que l'épaisseur radiale de la section de paroi radialement extérieure (38 ; 38a ; 38b ; 38c ; 38d).

5. Soupape à clapet selon l'une quelconque des revendications 1 à 4, **caractérisée en ce que** le renforcement (50c) présente au moins un élément de renforcement (60c), qui est fabriqué à partir d'une pluralité de sections d'élément de renforcement (80), dont respectivement des sections adjacentes sont reliées par l'intermédiaire de respectivement une entretoise (76) s'étendant dans la direction périphérique, étroite dans la direction longitudinale.

6. Soupape à clapet selon l'une quelconque des revendications 1 à 5, **caractérisée en ce que** les éléments de renforcement (60a, 60'a ; 60b, 60'b ; 60c) sont fixés ou sont placés de manière lâche dans l'évidement (70a, 70'a ; 70b, 70'b ; 70c) par collage ou par encliquetage.

7. Joint d'étanchéité pour une soupape à clapet, comprenant un corps d'étanchéité de forme annulaire composé d'un matériau élastomère, sachant que le corps d'étanchéité présente une section de paroi radialement intérieure (36a ; 36b ; 36c) par rapport à un axe longitudinal (16a ; 16b ; 16c) du corps d'étanchéité, laquelle présente une face étanche (46a ; 46b ; 46c), et une section de paroi radialement extérieure (38a ; 38b ; 38c), qui présente une extension longitudinale dans la direction de l'axe longitudinal (16, 16a ; 16b ; 16c ; 16d) plus longue que la section de paroi radialement intérieure (36a ; 36b ; 36c), sachant que la section de paroi radialement extérieure (38a ; 38b ; 38c) forme avec la section de paroi radialement intérieure (36a ; 36b ; 36c) un palier (40a ; 40b ; 40c), sachant que la section de paroi radialement extérieure (38a ; 38b ; 38c) présente un renforcement (50a ; 50b ; 50c) composé d'un matériau qui est plus rigide que le matériau élastomère, sachant que le renforcement (50a ; 50b ; 50c) soutient axialement la section de paroi radialement extérieure (38a ; 38b ; 38c), **caractérisé en ce que** le renforcement (50a ; 50b) est formé par au moins deux éléments de renforcement (60a, 60'a ; 60b, 60'b) séparés dans la direction périphérique, lesquels s'étendent respectivement en partie de manière périphérique sur la section de paroi radialement extérieure (38a ; 38b), sachant que les éléments de renforcement (60a, 60'a ; 60b, 60'b) sont réalisés sous la forme de sections de bande annulaire ou de petites plaques, et **en ce que** les éléments de renforcement (60 ; 60a, 60'a ; 60b, 60'b ; 60c) sont réalisés sous la forme de pièces d'insertion, qui sont placées dans un évidement respectif (70a, 70'a ; 70b, 70'b ; 70c) au niveau du côté extérieur radialement extérieur de la section de paroi radialement extérieure (38a ; 38b ; 38c).

8. Joint d'étanchéité selon la revendication 7, **caractérisé en ce que** le renforcement (50a ; 50b ; 50c) de la section de paroi radialement extérieure (38a ; 38b ; 38c) dans la direction longitudinale ne s'étend pas sur la totalité de la longueur axiale de la section de paroi radialement extérieure (38a ; 38b ; 38c) et est limité à la zone entre les extrémités longitudinales (42a, 44a ; 42b, 44b ; 42c, 44c).

9. Joint d'étanchéité selon la revendication 7 ou 8, **caractérisé en ce qu'**une distance la plus petite (a) entre une extrémité longitudinale du renforcement et une extrémité radialement et axialement intérieure du palier vers la section de paroi radialement intérieure est inférieure à une distance (b) entre ladite extrémité longitudinale du renforcement et l'extrémité axialement extérieure de la section de paroi radialement extérieure.

10. Joint d'étanchéité selon l'une quelconque des revendications 7 à 9, **caractérisé en ce que** le renforcement (50a ; 50b ; 50c) présente une épaisseur radiale qui est au maximum aussi grande que l'épaisseur radiale de la section de paroi radialement extérieure (38a ; 38b ; 38c).

11. Joint d'étanchéité selon l'une quelconque des revendications 7 à 10, **caractérisé en ce que** le renforcement (50c) présente au moins un élément de renforcement (60c), qui est fabriqué à partir d'une multitude de sections d'élément de renforcement (80), dont respectivement des sections adjacentes sont reliées par l'intermédiaire de respectivement une entretoise (76) s'étendant dans la direction périphérique étroite dans la direction longitudinale.

12. Joint d'étanchéité selon l'une quelconque des revendications 7 à 11, **caractérisé en ce que** les éléments de renforcement (60a, 60'a ; 60b, 60'b ; 60c) sont fixés ou sont placés de manière lâche dans l'évidement (70a, 70'a ; 70b, 70'b ; 70c,) par collage ou par encliquetage.
